# EUROPÄISCHE PATENTSCHRIFT

(11) **EP 3 552 470 B1**
(45) Veröffentlichungstag und Bekanntmachung des Hinweises auf die Patenterteilung: **19.05.2021**
(21) Anmeldenummer: 19167515.6
(22) Anmeldetag: 05.04.2019
(51) Int. Cl.: A01B 59/00, A01D 87/00, A01D 89/00, B60D 1/00

(54) **RAHMEN FÜR EINE VORRICHTUNG ZUR AUFNAHME UND ZUM TRANSPORT VON VORZUGSWEISE MÄHGUT**
FRAME FOR A DEVICE FOR HOLDING AND TRANSPORTING, PREFERABLY OF CROPS
CADRE POUR UN DISPOSITIF DE RÉCEPTION ET DE TRANSPORT, DE PRÉFÉRENCE DE PRODUIT À FAUCHER OU À TONDRE

(30) Priorität: 11.04.2018 DE 102018108642; 21.06.2018 DE 102018114955
(43) Veröffentlichungstag der Anmeldung: 16.10.2019
(73) Patentinhaber: KLP Baumaschinen GmbH, 95326 Kulmbach (DE)
(72) Erfinder: Küfner, Michael, 95349 Thurnau (DE); Hauke, Michael, 95326 Kulmbach (DE)
(74) Vertreter: Pröll, Jürgen

(56) Entgegenhaltungen:
- EP-A1- 0 259 801
- EP-A1- 2 731 414
- EP-A1- 3 028 558
- DE-A1- 3 733 352
- DE-A1- 4 212 417
- DE-B4-102013 221 285
- DE-C1- 4 415 205
- FR-A1- 3 037 344
- US-A1- 2005 208 262

## Beschreibung

Die vorliegende Erfindung betrifft einen Rahmen, der an einem Fahrzeug anbringbar ist.

Mittels des Rahmens ist eine Vorrichtung zur Aufnahme von auf einer Fläche liegenden Gegenständen und zu deren Transport gehalten und geführt.

Diese vorgenannten Gegenstände können auf einer Fläche liegende Halme, auch als Mähgut bezeichnet, sowie Schnee, Laub, Blätter, Grünschnitt, leichtes loses Material, insbesondere Müll, sein.

Der Rahmen mit der dortig gehaltenen und geführten Vorrichtung wird vorzugsweise bei landwirtschaftlichen Maschinen und Maschinen für die Biotoppflege eingesetzt.

Unter solche Maschinen werden im Sinne der Erfindung mehrachsige Traktoren sowie Ketten- bzw. Raupenfahrzeuge jeglicher Art im Sinne der Anmeldung verstanden.

Durch EP 2 700 296 A1 ist eine Vorrichtung zur Aufnahme und zum Transport von auf dem Boden liegenden, gemähten landwirtschaftlichen Halmgutes bekannt, das mittels einer an der Vorderseite eines wenigstens einachsigen, manuell geführten Traktors anbaubaren, rotierend angetriebenen und über eine Arbeitsbreite quer zur Fortbewegungsrichtung sich erstreckenden Achse auf dem Boden abgestützte Fördertrommel, die am Umfang an einer angetriebenen Welle verteilt abstehende Förderwerkzeuge aufweist und in Bodennähe in Fortbewegungsrichtung angetrieben ist, funktioniert. Die mit einem Fahrgestell des Traktors verbundene Fördertrommel weist mehrere entlang der Achse angeordnete und an der Welle verteilt befestigte Bürstenleisten auf, die aus von der Welle abstehenden Borstenreihen gebildet wird.

Nachteilig bei dieser Vorrichtung ist, dass die rotierend angetriebene Förderwalze über eine vom Fahrzeug ausgehende Antriebsachse angetrieben wird. Dabei wird die Förderwalze in diesem Punkt gelagert, was die Freiheitsgrade ihrer Bewegung insofern einschränkt, dass diese nur um die Antriebsachse längs in Fahrtrichtung kippt und sie somit nicht bodenparallel geführt werden kann. Außerdem ist ein Kippen der Vorrichtung quer zur Fahrtrichtung nicht möglich. Daher kann aufgenommenes Mähgut nach der Aufnahme und dem Transport nicht gezielt an einem Ort abgeladen werden.

Aus DE 10 2013 221 285 B4 ist ein schwenkbarer Wechselrahmen für eine Ladevorrichtung bekannt, mit der eine beliebige Vorrichtung an einen Frontlader angebracht werden kann und längs sowie quer zur Fahrtrichtung kippbar ist.

Nachteilig gemäß dieser Ausführung ist, dass die Schwenkachse in Fahrtrichtung seitlich nach unten versetzt und nicht mittig angeordnet ist, was eine bodenparallele Führung der Vorrichtung verhindert.

Aus DE 42 12 417 A1 ist ein Tragrahmen mit einer Mähvorrichtung bekannt, die an einem Frontdreipunkthubwerk eines Schleppers über einen mittig angeordneten Tragarm mit einem Gelenk, das seitliche Pendelbewegungen der angebrachten Vorrichtung zulässt, aufgehängt ist.

Nachteilig bei dieser Mähvorrichtung ist die Anbringung in Form einer Aufhängung, was die Anbringung beliebiger landwirtschaftlicher Vorrichtungen verhindert. Weiterhin wird die Arbeitshöhe der Vorrichtung über die Aufhängung eingestellt, die wiederum von der Landmaschine abhängig ist. Sie ist nicht direkt vom zu bearbeitenden Boden abhängig und eine bodenparallele Führung ist nicht möglich.

Aus DE 37 33 352 A1 ist ein Parallelogramm-Führungsrahmen bekannt, mit dem eine Vorrichtung an ein Trägerfahrzeug befestigt werden kann. Es kann die Vorrichtung in ihrer Arbeitshöhe so verstellt werden, dass der eingestellte Neigungswinkel unabhängig von der Höhe bestehen bleibt. Darüber hinaus ist es möglich, die angebrachte Vorrichtung in der horizontalen Ebene um ihre eigene Achse im Bereich von 0 bis 90° zu drehen.

Nachteilig ist aber, dass die Arbeitshöhe nicht als fester Abstand zwischen Boden und Vorrichtung bzw. Führungsrahmen einzustellen ist, sondern vom Führungsrahmen über einen Hydraulikzylinder eingestellt wird, der wiederum abhängig vom Trägerfahrzeug ist.

Nachteilig nach dem vorgenannten Stand der Technik ist, dass kein benannter Halte- und Führungsrahmen unabhängig von dem Fahrzeug, an dem der Rahmen befestigt ist, seine Position abhängig vom zu bearbeitenden Boden einnimmt.

Ein solcher Rahmen hätte den Vorteil, dass die am Rahmen angebrachte Vorrichtung sauber und gleichzeitig schonend bzgl. des Bodens arbeitet.

Es ist daher Aufgabe der vorliegenden Erfindung einen Rahmen, vorzugsweise ein Halte- und Führungsrahmen, bereitzustellen, der eine Vorrichtung zur Aufnahme und zum Transport von auf dem Boden liegenden Gegenständen fasst bzw. aufnimmt und diese bodenparallel mit einer einstellbaren Arbeitshöhe führt.

Die Möglichkeit, die Vorrichtung um ihre Achse quer zur Fahrtrichtung zu kippen, vereinfacht zusätzlich das Abladen der aufgenommenen Ladung.

Diese Aufgabe wird mit den Merkmalen des Patentanspruches 1 gelöst. Vorteilhafte Ausgestaltungen der Erfindung sind anhand der abhängigen Patentansprüche und der weiteren Beschreibung benannt und dargestellt.

Der erfindungsgemäße Rahmen für eine Vorrichtung zur Aufnahme und zum Transport von auf dem Boden liegenden Gegenständen ist an einem Fahrzeug anordenbar und besteht aus mindestens vier Lagern und wenigstens einem Stabilisator, sodass eine bodenparallele Führung der Vorrichtung ermöglicht ist. Die Vorrichtung folgt durch den Rahmen etwaigen Bodenwellen, Schräglagen und dergleichen bodenparallel mit immer der gleichen Arbeitshöhe. Technisch wird das durch eine sog. pendelnd gelagerte (schwimmende) Trapezaufhängung realisiert, die von der Erfindung umfasst ist.

Im Falle der Aufnahme von Mähgut, insbesondere im Zuge der Biotoppflege von Wiesen und Grünflächen, hat der Halte- und Führungsrahmen mit der beschriebenen Vorrichtung den Vorteil, dass die mühsame und zeit- sowie personalintensive, händische Arbeit der Aufnahme und des Abtransports des Mähguts maschinell erfolgt. Gleichzeitig ist die schonende Aufnahme des Mähguts förderlich für die Insektenwelt auf den Wiesen und Grünflächen und damit ein wertvoller Beitrag zum Umwelt- und Naturschutz.

Offenbart nach Patentanspruch 1 ist, dass der Rahmen mittels eines Leiterrahmens am Fahrzeug befestigt ist, wobei das Fahrzeug ein mindestens zweiachsiges Fahrzeug ist und/oder der Rahmen frontseitig, seitlich versetzt oder rückseitig am Fahrzeug angebracht ist. Dadurch kann der Rahmen an verschiedene, große sowie kleine Fahrzeuge montiert werden, was ein weites Einsatzgebiet ermöglicht. Weiterhin wird durch die Möglichkeit der verschiedenartigen Anbringung an ein Fahrzeug ein Einsatz an verschiedenen Fahrzeugen in verschiedenen Einsatzsituationen und -orten ermöglicht.

Vorteilhaft nach Patentanspruch 3 ist, dass die Pendellager Verbindungen sind, die in alle drei Raumrichtungen rotatorisch beweglich sind, wobei ein Pendellager als Pendelrollenlager, Pendelkugellager, Gelenklager, Gelenkkopflager oder Radialgelenklager ausgeführt ist. Diese Lager ermöglichen eine pendelnd gelagerte Trapezaufhängung des Rahmens, was wiederum eine bodenparallele Führung des Rahmens und der damit geführten Vorrichtung ermöglicht.

Gemäß Patentanspruch 1 ist angegeben, dass der Rahmen jeweils ein erstes Pendellager zwischen einem linear in axiale Richtung beweglichen Aktor und dem Leiterrahmen, ein zweites Pendellager zwischen Längsholmen und dem Leiterrahmen, ein drittes Pendellager zwischen Längsholmen und Seitenrahmenteil und ein viertes Pendellager zwischen dem linear in axiale Richtung beweglichen Aktor und Seitenrahmenteil besitzt. Dadurch wird eine Parallelogrammführung des Rahmens bzgl. der Seiten rechts und links hergestellt, was dazu führt, dass der vordere Teil des Rahmens, bestehend aus den Seitenrahmenteilen, und der Leiterrahmen sich in ihrer Auf- und Abbewegung sowie der seitlichen Scherbewegung parallel zueinander bewegen. So kann die Vorrichtung, welche am vorderen Teil des Rahmens befestigt ist, bodenparallel geführt werden, ohne dass sich die Bewegungen des Fahrzeugs, welches den Rahmen samt Vorrichtung führt, auf diesen übertragen, weil es bspw. über ein Hindernis fährt.

Vorteilhaft nach Patentanspruch 3 ist, dass der Rahmen acht Pendellager aufweist und die Seitenrahmenteile eine Parallelogrammführung erfahren und gleichzeitig mithilfe der linear in axiale Richtung beweglichen Aktoren um die frontale Querachse, welche durch die Pendellager an den vorderen Enden der Längsholmen führt, kippbar sind. Die Kippbewegung der Seitenrahmenteile an der Vorderseite des Rahmens führt zu einem An- bzw. Abkippen der Vorrichtung, die an den Seitenrahmenteilen befestigt ist. Dadurch können die von der Vorrichtung aufgenommenen Gegenstände einerseits durch Abkippen abgeladen werden und andererseits kann in angekippter Stellung das Fahrzeug mit dem Rahmen und der Vorrichtung fahren, ohne dass diese sich wie in der Arbeitsposition über den Boden bewegt und möglicherweise Schaden nimmt.

Vorteilhaft nach Patentanspruch 4 ist, dass der linear in axiale Richtung bewegliche Aktor ein hydraulisch betriebener Zylinder ist. Hydraulikzylinder sind stufenlos fahrbar, besitzen eine hohe Leistungsdichte, sind robust und einfach zu verbauen. Sie zeichnen sich bei bestimmungsgemäßem Gebrauch außerdem durch eine hohe Lebensdauer aus.

Vorteilhaft nach Patentanspruch 5 ist, dass die Vorrichtung eine Förderwalze mit gegenläufig zur Fahrtrichtung rotierenden Borsten ist und an den Seitenrahmenteilen quer zur Fahrtrichtung angeordnet ist. So können auf dem Boden liegende Gegenstände, wie z.B. Mähgut, gefasst und aufgenommen werden, sodass sie nach oben über die Förderwalze hinweg befördert werden.

Vorteilhaft nach Patentanspruch 6 ist, dass an der Förderwalze ein Pickup-System nachfolgend angeordnet ist, welches die aufgenommenen Gegenstände aufnimmt und durch Seitenteile links und rechts hält (Transportposition) oder zur linken oder rechten Seite durch Öffnen eines der Seitenteile (Abweisposition) leitet. In Transportposition werden die aufgenommenen Gegenstände hinter der Förderwalze auf dem Pickup-System gesammelt und abtransportiert. In der Abweisposition wird je nach geöffnetem Seitenteil auf der rechten oder linken Seite der Vorrichtung ein Walm mit den von der Förderwalze aufgenommenen Gegenständen gebildet, die während der Aufnahme über das Pickup-System an der jeweiligen Seite gesammelt wieder abrutschen und so einen Walm bilden.

Vorteilhaft nach Patentanspruch 7 ist, dass die Förderwalze hydraulisch angetrieben ist, wobei das Fahrzeug die hydraulische Energie bereitstellt. Die Nutzung von hydraulischer Energie bietet sich an, wenn bereits die linearen Aktoren des Rahmens als Hydraulikzylinder ausgeführt sind und so nur eine Energieform genutzt wird. Mit hydraulischer Energie können hohe Leistungen bei kleinem Bauraum realisiert werden. Der Antrieb für die Vorrichtung kann kompakt und leicht gebaut werden. Ein Energiewandler, wie bspw. ein Generator, für den Antrieb der Vorrichtung entfällt, wenn die Energie dafür vom Fahrzeug, welches den Rahmen mit der Vorrichtung trägt, bezogen wird, was zusätzliche Kosten und Gewicht einspart.

Vorteilhaft nach Patentanspruch 8 ist, dass die Seitenrahmenteile mit einem Querträger oder Befestigungselementen verbunden sind. Im Falle des Querträgers schafft eine solche Verbindung zusätzlich Stabilität im Rahmen. Außerdem bietet ein Querträger bzw. Befestigungselement die Möglichkeit auf vielfältige Art und Weise verschiedenste Dinge und Vorrichtungen daran zu befestigen.

Vorteilhaft nach Patentanspruch 9 ist, dass wenigstens ein Stabilisator über seine Anbindungspunkte am Längsholm und am Leiterrahmen diese miteinander verbindet, sodass eine Stabilisierung des Rahmens erfolgt, und/oder der Stabilisator eine zugbelastbare oder eine zug- und druckbelastbare Verbindung ist. So wird ein seitliches Ausscheren der rechten sowie linken Seite des Rahmens verhindert und für Stabilität gesorgt. Weiterhin erlaubt diese Einschränkung eine einfache Bauweise, da Scher- und Biegekräfte nicht zusätzlich aufgenommen werden sollen.

Vorteilhaft nach Patentanspruch 10 ist, dass der wenigstens eine Stabilisator in seinen Anbindungspunkten freibeweglich pendelnd gelagert ist, sodass eine parallelgeführte Trapezaufhängung entsteht, wodurch die bodenparallele Führung des Rahmens erfolgt. Einerseits erlaubt die bodenparallele Führung ein sauberes Arbeiten der Vorrichtung und andererseits wird der Boden sowie die Vorrichtung vor Schäden durch ungewollten Bodenkontakt bewahrt.

Vorteilhaft nach Patentanspruch 11 ist, dass der Stabilisator bei einer zugbelastbaren Verbindung als ein Seil oder eine Kette oder bei einer zug- und druckbelastbaren Verbindung als eine Stange ausgestaltet ist. Diese Ausführung erlaubt eine leichte, kompakte und kostengünstige Bauweise mit einfachen Bauelementen.

Vorteilhaft nach Patentanspruch 12 ist, dass die Arbeitshöhe zwischen dem Boden und Rahmen durch Kufen und/oder im Nachlauf gelagerten Rollen definiert ist, und/oder die Kufen und/oder im Nachlauf gelagerten Rollen in ihrer Höhe verstellbar sind. Dadurch wird eine gleichbleibende Bodenführung des Rahmens mit der Vorrichtung hergestellt. Außerdem entkoppelt diese Abstützung des Rahmens die Auf- und Abbewegungen vom Fahrzeug, an dem der Rahmen befestigt ist. Außerdem kann so die Arbeitshöhe des Rahmens bzw. der Vorrichtung gegenüber dem Boden individuell je nach Einsatz verändert und eingestellt werden.

Vorteilhaft nach Patentanspruch 13 ist, dass die Kufen und/oder im Nachlauf gelagerten Rollen am Querträger oder an den Befestigungselementen und/oder an den Längsholmen angeordnet sind. Dadurch wird eine stabile Führung des Rahmens bei gleichzeitig unkomplizierter und robuster Montage ermöglicht. Weiterhin ist durch die Anbringung an besagten Stellen ein leichtes Ein- und Verstellen der Arbeitshöhe möglich, da weitere Bauteile den Zugriff auf die Kufen und/oder im Nachlauf gelagerten Rollen nicht verwehren. Die nachfolgende Beschreibung der Erfindung anhand eines konkreten Ausführungsbeispiels stellt keine Limitierung der Erfindung auf dieses konkrete Ausführungsbeispiel dar.

Es zeigen die nachfolgenden Figuren:
- FIG 1: eine Skizze eines Rahmens mit der Perspektive von schräg vorn;
- FIG 2: eine Skizze eines Rahmens, der an einer Raupe befestigt ist, mit einer angebrachten Vorrichtung, welche eine Förderwalze und ein Pickup-System umfasst;
- FIG 3: eine spiegelsymmetrische Skizze des unteren Teils eines Rahmens in der Draufsicht;
- FIG 4: eine spiegelsymmetrische Skizze des oberen Teils eines Rahmens in der Draufsicht.

In der nachfolgenden Figurenbeschreibung werden figurenübergreifend für gleiche Elemente gleiche Bezugszeichen verwendet. Dies dient der einfachen und besseren Verständlichkeit der weiteren Figurenbeschreibung.

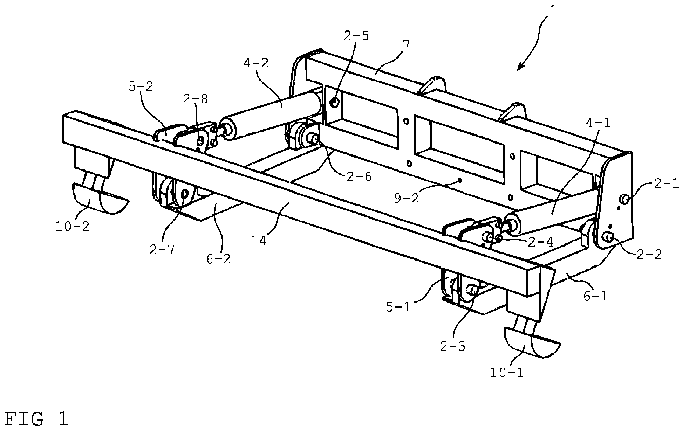

FIG 1 zeigt einen Rahmen 1 mit Pendellagern 2-1, 2-2, 2-3, 2-4, 2-5, 2-6, 2-7, 2-8, Hydraulikzylindern 4-1, 4-2, Seitenrahmenteilen 5-1, 5-2, Längsholmen 6-1, 6-2, einen Leiterrahmen 7, eine Befestigung 9-2 für Stabilisatoren 3-1, 3-2 (in FIG 1 nicht dargestellt) am Leiterrahmen 7 sowie Kufen 10-1, 10-2 und einen Querträger 14.

Hierbei sind in der gezeigten Ausgestaltung die Längsholme 6-1, 6-2 senkrecht zum Leiterrahmen 7 angeordnet. An den äußeren Seiten des Leiterrahmens 7 sind jeweils unten über die Pendellager 2-2, 2-6 die Enden der Längsholme 6-1 bzw. 6-2 befestigt. Parallel dazu sind über den Längsholmen 6-1, 6-2 die linearen Aktoren 4-1, 4-2, hier als Hydraulikzylinder ausgeführt, angeordnet, wobei die jeweils hinteren Enden der Zylinder der Hydraulikzylinder 4-1, 4-2 über die Pendellager 2-1 bzw. 2-5 wie bei den Längsholmen 6-1, 6-2 an den äußeren Enden des Leiterrahmens 7 befestigt sind. Gegenüberliegend sind die Enden der Hubkolben der Hydraulikzylinder 4-1,4-2 jeweils über die Pendellager 2-4 bzw. 2-8 ähnlich wie bei den Längsholmen 6-1, 6-2 an den Seitenrahmenteilen 5-1 bzw. 5-2 oben befestigt.

Es können sich die rechte sowie die linke Seite des Rahmens 1 bei gleichbleibendem Neigungswinkel der Seitenrahmenteile 5-1, 5-2 durch die sog. Parallelogrammführung unabhängig voneinander auf und ab bewegen. Die Hydraulikzylinder 4-1; 4-2 bestimmen durch Ein- und Ausfahren der Hubkolben die Neigung der Seitenrahmenteile 5-1; 5-2, was bei einer angebrachten Vorrichtung ein Abkippen der Ladung ermöglicht.

Die Seitenrahmenteile 5-1, 5-2 sind durch einen Querträger 14 miteinander verbunden, an welchem eine Vorrichtung 8 (hier nicht dargestellt) befestigt werden kann.

An den äußeren Seiten des Querträgers 14 sind jeweils Kufen 10-1, 10-2 angeordnet, die ein Gleiten des Rahmens 1 über den Boden ermöglichen. Gleichzeitig definieren die Kufen 10-1, 10-2 die Arbeitshöhe des Rahmens 1 und der daran befestigten Vorrichtung 8.

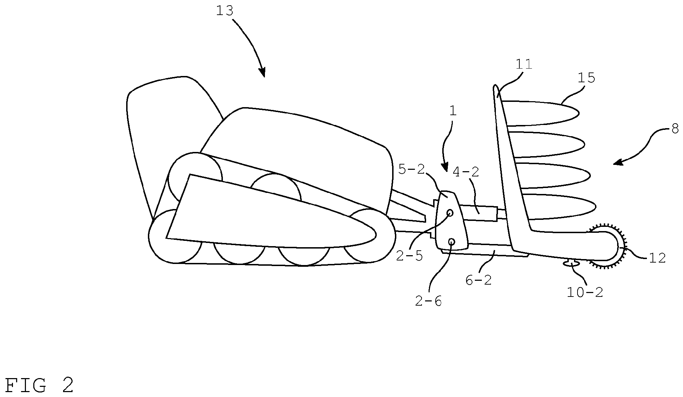

In FIG 2 ist eine weitere Ausgestaltung des Rahmens 1 gezeigt, bei der der Rahmen 1 gemeinsam mit einer Vorrichtung 8 zur Aufnahme und zum Transport von bspw. Mähgut frontseitig an ein Raupenfahrzeug 13 angebracht ist.

Die Vorrichtung 8 umfasst hierbei eine Förderwalze 12, welche mit Borsten bestückt ist, die das aufzunehmende Gut fassen und durch die zur Fahrtrichtung gegenläufige Drehbewegung auf das Pickup-System 11 über die Förderwalze 12 hinweg nach oben befördern. Zusätzlich sind an das Pickup-System 11 Seitenteile 15 angebracht, die in gezeigter Position das aufgenommene Gut auf dem Pickup-System 11 halten, sodass es gleichzeitig transportiert werden kann. Die Seitenteile 15 befinden sich in der sog. Transportposition. Optional können sie auch geöffnet werden (Abweisposition). Hierbei ist es von Vorteil, wenn nur an einer Seite die Seitenteile 15 sich in der Abweisposition befinden, um an dieser durch das gezielte Ableiten des bspw. Mähguts einen Walm zu formen.

Die Kufen (in der Seitenansicht ist nur 10-1 sichtbar, da sich 10-2 in direkter Flucht befindet) sind in dieser Ausführung an der linken und rechten Seite der Vorrichtung 8 angebracht. Sie bestimmen die Arbeitshöhe der Vorrichtung 8 und des Rahmens 1. Durch die pendelnd (schwimmend) gelagerte Trapezaufhängung des Rahmens 1 wird die Vorrichtung 8 bodenparallel unabhängig von der Position bzw. Neigung des Raupenfahrzeugs 13 geführt.

Mit den Hydraulikzylindern 4-1, 4-2 kann die Vorrichtung 8 um die Querachse der Pendellager 2-3, 2-7 nach vorn gekippt werden, sodass das aufgenommene Gut vornüber abgekippt werden kann. Zur Unterstützung kann dabei die Förderwalze 12 in Drehung in Fahrtrichtung versetzt werden, sodass die Borsten das Gut fassen und nach vorn abwerfen.

Die hydraulische Energie für die Hydraulikzylinder 4-1, 4-2 sowie für die Drehbewegung der Förderwalze 12 wird von dem Raupenfahrzeug 13 bereitgestellt.

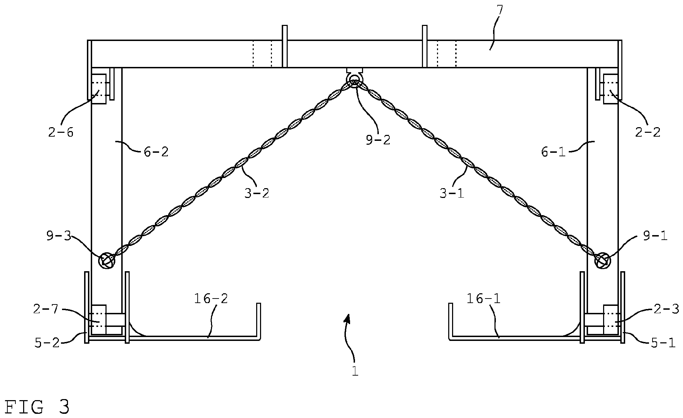

Die FIG 3 zeigt eine spiegelsymmetrische mit (senkrechter Symmetrieachse) Skizze des unteren Teils des Rahmens 1 in der Draufsicht. An den Außenseiten des Leiterrahmens 7 sind jeweils ein Längsholmen 6-1; 6-2 angeordnet. Miteinander verbunden werden sie über die Pendellager 2-2 und 2-6, die sich jeweils am äußeren Ende der Längsholmen 6-1; 6-2 und des Leiterrahmens 7 befinden. In der gezeigten Ausgestaltung sind die Längsholme 6-1, 6-2 senkrecht zum Leiterrahmen 7 angeordnet.

Am gegenüberliegenden Ende des Längsholmens 6-1 ist über das Pendellager 2-3 ein Seitenrahmenteil 5-1 angeordnet, an dem senkrecht dazu ein Befestigungselement 16-1 angeordnet ist, an dem die Vorrichtung 8 (hier nicht dargestellt) angebracht werden kann. Gleiche Anordnung gilt entsprechend für das spiegelsymmetrische Pendant mit Längsholmen 6-2,
Pendellager 2-7, Seitenrahmenteil 5-2 und
Befestigungselement 16-2.

Der Leiterrahmen 7 dient der Befestigung an einem Fahrzeug 13 (hier nicht dargestellt). Die unteren Pendellager 2-2, 2-3 mit den spiegelsymmetrisch angeordneten Pendellagern 2-6, 2-7 erzeugen gemeinsam mit dem Leiterrahmen 7, den Längsholmen 6-1, 6-2 und den Stabilisatoren 3-1, 3-2 eine pendelnd (schwimmend) gelagerte Trapezaufhängung. Diese Ausgestaltung der Lagerung ermöglicht die bodenparallele Führung des Rahmens 1. Hierbei sind die gegenüberliegenden Längsholme 6-1, 6-2 über die Anbindungspunkte der Stabilisatoren 9-1, 9-3, wobei der Anbindungspunkt 9-1 sich mittig auf dem Längsholm 6-1 im vorderen Drittel in der Nähe von dem Pendellager 2-3 und der Anbindungspunkt 9-3 entsprechend spiegelsymmetrisch sich mittig auf dem Längsholm 6-2 im vorderen Drittel in der Nähe von dem Pendellager 2-7 befindet, und den dazugehörigen Stabilisatoren 3-1, 3-2 mit dem Leiterrahmen 7, an dem sich in der Mitte der Anbindungspunkt 9-2 befindet, miteinander verbunden. Dabei verbindet Stabilisator 3-1 über die Anbindungspunkte 9-1, 9-2 den Längsholm 6-1 mit dem Leiterrahmen 7. Entsprechend spiegelsymmetrisch verbindet der Stabilisator 3-2 über die Anbindungspunkte 9-3, 9-2 den Längsholm 6-2 mit dem Leiterrahmen 7. Dadurch können die rechte bzw. die linke Seite des Rahmens 1 nicht nach außen schwenken und bleiben so in paralleler Stellung.

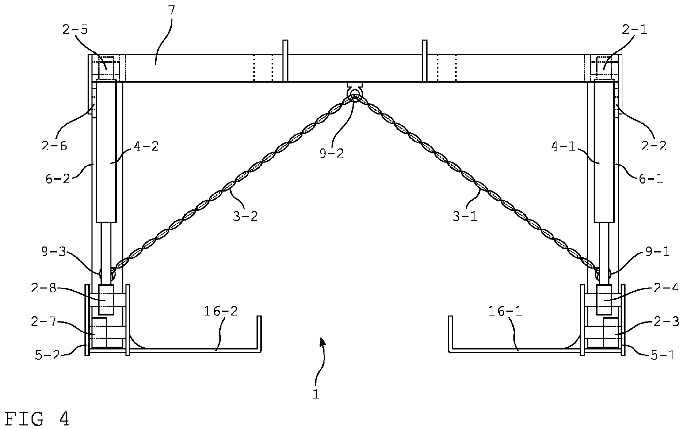

FIG 4 zeigt eine spiegelsymmetrische (mit senkrechter Symmetrieachse) Skizze des oberen und unteren Teils des Rahmens 1 in der Draufsicht

Der untere Teil des Rahmens 1 besteht aus zwei Längsholmen 6-1, 6-2, die jeweils an einem Ende mit einem Pendellager 2-2 bzw. 2-6 an den beiden äußeren Seiten des Leiterrahmens 7 unten befestigt sind. In der gezeigten Ausgestaltung sind die Längsholme 6-1, 6-2 in senkrechter Anordnung zum Leiterrahmen 7 ausgeführt.

An den gegenüberliegenden Enden der Längsholme 6-1, 6-2 sind jeweils ein Pendellager 2-3 bzw. 2-7 befestigt. Daran schließen sich die Seitenrahmenteile 5-1 bzw. 5-2 an, an die wiederum senkrecht (quer zur Fahrtrichtung des Rahmens 1) dazu jeweils ein Befestigungselement 16-1 bzw. 16-2 befestigt ist. An die Befestigungselemente 16-1, 16-2 kann eine Vorrichtung 8 (hier nicht dargestellt) montiert werden.

In der Mitte des Rahmens 7 befindet sich ein Anbindungspunkt 9-2. Im vorderen Drittel, nahe den Seitenrahmenteilen, sind mittig an den Längsholmen 6-1, 6-2 jeweils ein Anbindungspunkt 9-1 bzw. 9-3 befestigt. Stabilisatoren 3-1, 3-2 verbinden die Längsholme 6-1, 6-2 mit dem Leiterrahmen 7 über ihre jeweiligen Anbindungspunkte 9-1, 9-2 bzw. 9-3, 9-2. Die Anbringung von Stabilisatoren 3-1, 3-2 verhindert ein seitliches Ausscheren der beiden Flanken (rechte und linke Seite) des Rahmens 1 und erzeugen gemeinsam mit den Pendellagern 2-2, 2-3, 2-6, 2-7 eine pendelnd (schwimmend) gelagerte Trapezaufhängung. Sie ermöglicht Auf- und Abbewegungen der Flanken des Rahmens 1 unabhängig voneinander.

Der obere Teil des Rahmens 1 befindet sich von oben gesehen in der Flucht des unteren Teils. Er besteht aus zwei linearen Aktoren 4-1, 4-2, die in der gezeigten Ausgestaltung als Hydraulikzylinder ausgeführt sind. Das hintere Ende der Zylinder von den Hydraulikzylindern 4-1, 4-2 ist jeweils über ein Pendellager 2-1 bzw. 2-5 mit den äußeren Seiten des Leiterrahmens 7 oben verbunden. Das gegenüberliegende Ende der Hydraulikzylinder 4-1, 4-2, die Hubkolben, sind über die Pendellager 2-3 bzw. 2-7 mit den Seitenrahmenteilen 5-1 bzw. 5-2 oben verbunden. Diese Ausführung erlaubt ein Kippen der Seitenrahmenteile 5-1, 5-2 um die vordere Querachse, welche durch die Pendellager 2-3, 2-7 verläuft durch ein und Ausfahren der Hubkolben der Hydraulikzylinder 4-1, 4-2. Außerdem erfahren die seitlichen Flanken des Rahmens 1 eine Parallelogrammführung, die bei einer jeweiligen Auf- und Abbewegung eine parallele Führung der Seitenrahmenteile 5-1; 5-2 gegenüber dem Leiterrahmen 7 ermöglichen. So wird ein Verkippen einer über die Befestigungselemente 16-1, 16-2 angeordnete Vorrichtung 8 (hier nicht dargestellt) verhindert, wenn bspw. einseitig ein Hindernis überfahren wird.

Über den Leiterrahmen 7 wird der gesamte Rahmen 1 an ein Fahrzeug 13 (in FIG 4 nicht dargestellt) montiert. Die hydraulische Energie für den Antrieb der angebrachten Vorrichtung 8 (ebenfalls in FIG 4 nicht dargestellt) und der Hydraulikzylinder 4-1, 4-2 werden von dem Fahrzeug 13 bereitgestellt.

In einer weiteren Ausgestaltung der Erfindung wird anstelle von hydraulischer Energie elektrische Energie verwendet. Es werden sodann die Hydraulikelemente durch Elektromotoren ersetzt. Es können auch Linearmotoren zum Einsatz kommen.

### Bezugszeichenliste

- 1: Rahmen
- 2-1: Pendellager
- 2-2: Pendellager
- 2-3: Pendellager
- 2-4: Pendellager
- 2-5: Pendellager
- 2-6: Pendellager
- 2-7: Pendellager
- 2-8: Pendellager
- 3-1: Stabilisator
- 3-2: Stabilisator
- 4-1: Hydraulikzylinder
- 4-2: Hydraulikzylinder
- 5-1: Seitenrahmenteil
- 5-2: Seitenrahmenteil
- 6-1: Längsholmen
- 6-2: Längsholmen
- 7: Leiterrahmen
- 8: Vorrichtung
- 9-1: Anbindungspunkt des Stabilisators
- 9-2: Anbindungspunkt des Stabilisators
- 9-3: Anbindungspunkt des Stabilisators
- 10-1: Kufe
- 10-2: Kufe
- 11: Pickup-System
- 12: Förderwalze
- 13: Fahrzeug
- 14: Querträger
- 15: Seitenteile
- 16-1: Befestigungselement
- 16-2: Befestigungselement

## Patentansprüche

1. Rahmen (1), welcher an einem Fahrzeug (13) anordenbar ist, mit einer Vorrichtung (8) zur Aufnahme von auf dem Boden liegenden Gegenständen, wobei der Rahmen (1) mittels eines Leiterrahmens (7) frontseitig, seitlich versetzt oder rückseitig am Fahrzeug (13) anbringbar ist, **dadurch gekennzeichnet, dass** am Rahmen (1) mindestens vier Pendellager (2-1, 2-2, 2-3, 2-4, 2-5, 2-6, 2-7, 2-8) und wenigstens ein Stabilisator (3-1, 3-2) angeordnet sind, wobei der Rahmen (1) jeweils ein erstes Pendellager (2-1) zwischen einem linear in axiale Richtung beweglichen Aktor (4-1; 4-2) und dem Leiterrahmen (7), ein zweites Pendellager (2-2) zwischen einem Längsholm (6-1; 6-2) und dem Leiterrahmen (7), ein drittes Pendellager (2-3) zwischen dem Längsholm (6-1; 6-2) und einem Seitenrahmenteil (5-1; 5-2) und ein viertes Pendellager (2-4) zwischen dem linear in axiale Richtung beweglichen Aktor (4-1; 4-2) und dem Seitenrahmenteil (5-1; 5-2) besitzt, wodurch eine pendelnd gelagerte Trapezaufhängung zur bodenparallelen Führung der Vorrichtung (8) realisiert ist.

2. Rahmen (1) nach Patentanspruch 1 **dadurch gekennzeichnet, dass** die Pendellager (2-1, 2-2, 2-3, 2-4, 2-5, 2-6, 2-7, 2-8) Verbindungen sind, die in alle drei Raumrichtungen rotatorisch beweglich sind, wobei ein Pendellager (2-1; 2-2; 2-3; 2-4; 2-5; 2-6; 2-7; 2-8) als Pendelrollenlager oder Pendelkugellager oder Gelenklager oder Gelenkkopflager oder Radialgelenklager ausgeführt ist.

3. Rahmen (1) nach einem der Patentansprüche 1 und 2 **dadurch gekennzeichnet, dass** der Rahmen (1) acht Pendellager (2-1; 2-2; 2-3; 2-4; 2-5; 2-6; 2-7; 2-8) aufweist und die Seitenrahmenteile (5-1, 5-2) eine Parallelogrammführung erfahren und gleichzeitig mithilfe der linear in axiale Richtung beweglichen Aktoren (4-1; 4-2) um die frontale Querachse, welche durch die Pendellager (2-3, 2-7) an den vorderen Enden der Längsholmen (6-1; 6-2) führt, kippbar sind.

4. Rahmen (1) nach Patentanspruch 1 oder 3 **dadurch gekennzeichnet, dass** der linear in axiale Richtung bewegliche Aktor (4-1; 4-2) ein hydraulisch betriebener Zylinder ist.

5. Rahmen (1) nach Patentanspruch 1 oder 3 **dadurch gekennzeichnet, dass** die Vorrichtung (8) eine Förderwalze (12) mit gegenläufig zur Fahrtrichtung rotierenden Borsten ist und an den Seitenrahmenteilen (5-1, 5-2) quer zur Fahrtrichtung angeordnet ist.

6. Rahmen (1) nach Patentanspruch 5 **dadurch gekennzeichnet, dass** an der Förderwalze (12) ein Pickup-System (11) nachfolgend angeordnet ist, welches die aufgenommenen Gegenstände aufnimmt und durch Seitenteile (15) links und rechts hält (Transportposition) oder zur linken oder rechten Seite durch Öffnen eines der Seitenteile (15) (Abweisposition) leitet.

7. Rahmen (1) nach Patentanspruch 5 oder 6 **dadurch gekennzeichnet, dass** die Förderwalze (12) hydraulisch angetrieben ist, wobei das Fahrzeug (13) die hydraulische Energie bereitstellt.

8. Rahmen (1) nach Patentanspruch 1, 3 oder 5 **dadurch gekennzeichnet, dass** die Seitenrahmenteile (5-1, 5-2) mit einem Querträger (14) oder Befestigungselementen (16-1, 16-2) verbunden sind.

9. Rahmen (1) nach Patentanspruch 1 oder 3 **dadurch gekennzeichnet, dass** wenigstens ein Stabilisator (3-1; 3-2) über seine Anbindungspunkte (9-1; 9-2; 9-3) am Längsholm (6-1; 6-2) und am Leiterrahmen (7) diese miteinander verbindet, sodass eine Stabilisierung des Rahmens (1) erfolgt, und/oder der Stabilisator (3-1; 3-2) eine zugbelastbare oder eine zug- und druckbelastbare Verbindung ist.

10. Rahmen (1) nach Patentanspruch 9 **dadurch gekennzeichnet, dass** der wenigstens eine Stabilisator (3-1; 3-2) in seinen Anbindungspunkten (9-1; 9-2; 9-3) freibeweglich pendelnd gelagert ist, sodass eine parallelgeführte Trapezaufhängung entsteht, wodurch die bodenparallele Führung des Rahmens (1) erfolgt.

11. Rahmen (1) nach Patentanspruch 9 bis 10 **dadurch gekennzeichnet, dass** der Stabilisator (3-1; 3-2) bei einer zugbelastbaren Verbindung als ein Seil oder eine Kette oder bei einer zug- und druckbelastbaren Verbindung als eine Stange ausgestaltet ist.

12. Rahmen (1) nach Patentanspruch 1 **dadurch gekennzeichnet, dass** die Arbeitshöhe zwischen dem Boden und Rahmen (1) durch Kufen (10-1, 10-2) und/oder im Nachlauf gelagerten Rollen definiert ist, und/oder die Kufen (10-1, 10-2) und/oder im Nachlauf gelagerten Rollen in ihrer Höhe verstellbar sind.

13. Rahmen (1) nach Patentanspruch 1, 3 oder 12 **dadurch gekennzeichnet, dass** die Kufen (10-1, 10-2) und/oder im Nachlauf gelagerten Rollen am Querträger (14) oder an den Befestigungselementen (16-1, 16-2) und/oder an den Längsholmen (6-1, 6-2) angeordnet sind.

## Claims

1. Frame (1) which can be arranged on a vehicle (13), having a device (8) for receiving objects lying on the ground, wherein the frame (1) can be attached to the front, laterally offset or rear of the vehicle (13) by means of a ladder frame (7), **characterised in that** at least four self-aligning bearings (2-1, 2-2, 2-3, 2-4, 2-5, 2-6, 2-7, 2-8) and at least one stabiliser (3-1, 3-2) are arranged on the frame (1), wherein the frame (1) has in each case a first self-aligning bearing (2 1) between an actuator (4-1; 4-2), which is linearly movable in the axial direction, and the ladder frame (7), a second self-aligning bearing (2-2) between a longitudinal spar (6-1; 6-2) and the ladder frame (7), a third self-aligning bearing (2-3) between the longitudinal spar (6-1; 6-2) and a side frame part (5-1; 5-2) and a fourth self-aligning bearing (2-4) between the actuator (4-1; 4-2), which is linearly movable in the axial direction, and the side frame part (5-1; 5-2), whereby a pendulum-mounted trapezoidal suspension for guiding the device (8) parallel to the ground is realised.

2. Frame (1) according to claim 1, **characterised in that** the self-aligning bearings (2-1, 2-2, 2-3, 2-4, 2-5, 2-6, 2-7, 2-8) are connections which are rotationally movable in all three spatial directions, wherein a self-aligning bearing (2-1; 2-2; 2-3; 2-4; 2-5; 2-6; 2-7; 2-8) is designed as a self-aligning roller bearing or self-aligning ball bearing or spherical plain bearing or rod end bearing or radial spherical plain bearing.

3. Frame (1) according to one of the claims 1 and 2, **characterised in that** the frame (1) has eight self-aligning bearings (2-1; 2-2; 2-3; 2-4; 2-5; 2-6; 2-7; 2-8) and the side frame parts (5-1, 5-2) are guided in a parallelogram and at the same time can be tilted with the aid of actuators (4-1; 4-2) which can be moved linearly in the axial direction around the frontal transverse axis which passes through the self-aligning bearings (2-3, 2-7) at the front ends of the longitudinal spars (6-1; 6-2).

4. Frame (1) according to claim 1 or 3, **characterised in that** the actuator (4-1; 4-2) which is linearly movable in the axial direction is a hydraulically operated cylinder.

5. Frame (1) according to claim 1 or 3, **characterised in that** the device (8) is a conveyor roller (12) with bristles rotating in the opposite direction to the driving direction and is arranged on the side frame parts (5-1, 5-2) transversely to the driving direction.

6. Frame (1) according to claim 5, **characterised in that** a pick-up system (11) is subsequently arranged on the conveyor roller (12), which picks up the picked-up objects and holds them by side parts (15) on the left and right (transport position) or guides them to the left or right side by opening one of the side parts (15) (reject position).

7. Frame (1) according to claim 5 or 6, **characterised in that** the conveyor roller (12) is hydraulically driven, wherein the vehicle (13) provides the hydraulic power.

8. Frame (1) according to claim 1, 3 or 5, **characterised in that** the side frame parts (5-1, 5-2) are connected to a cross member (14) or fastening elements (16-1, 16-2).

9. Frame (1) according to claim 1 or 3, **characterised in that** at least one stabiliser (3-1; 3-2) connects the longitudinal spar (6-1; 6-2) and the ladder frame (7) to one another via its connection points (9-1; 9-2; 9-3), so that the frame (1) is stabilised, and/or the stabiliser (3-1; 3-2) is a connection which can be loaded in tension or in tension and compression.

10. Frame (1) according to claim 9, **characterised in that** the at least one stabiliser (3-1; 3-2) is mounted in a freely movable pendulum manner at its connection points (9-1; 9-2; 9-3), so that a parallel-guided trapezoidal suspension is formed, whereby the frame (1) is guided parallel to the ground.

11. Frame (1) according to claims 9 to 10, **characterised in that** the stabiliser (3-1; 3-2) is designed as a cable or a chain in the case of a tension-loadable connection or as a rod in the case of a tension- and compression-loadable connection.

12. Frame (1) according to claim 1, **characterised in that** the working height between the ground and the frame (1) is defined by skids (10-1, 10-2) and/or caster-mounted rollers, and/or the skids (10-1, 10-2) and/or caster-mounted rollers are adjustable in height.

13. Frame (1) according to claim 1, 3 or 12, **characterised in that** the skids (10-1, 10-2) and/or caster-mounted rollers are arranged on the cross member (14) or on the fastening elements (16-1, 16-2) and/or on the longitudinal spars (6 1, 6 2).

## Revendications

1. Châssis (1), lequel peut être agencé contre un véhicule (13), avec un dispositif (8) destiné à recevoir des objets qui sont par terre, dans lequel le châssis (1) peut être attaché à l'avant, décalé latéralement ou à l'arrière du véhicule (13) au moyen d'un cadre-échelle (7),
**caractérisé en ce que**
au moins quatre paliers de pendule (2-1, 2-2, 2-3, 2-4, 2-5, 2-6, 2-7, 2-8) et au moins un stabilisateur (3-1, 3-2) sont agencés contre le châssis (1), dans lequel le châssis (1) possède respectivement un premier palier de pendule (2-1) entre un actionneur (4-1 ; 4-2) mobile de façon linéaire dans la direction axiale et le cadre-échelle (7), un deuxième palier de pendule (2-2) entre un longeron (6-1 ; 6-2) et le cadre-échelle (7), un troisième palier de pendule (2-3) entre le longeron (6-1 ; 6-2) et une pièce de châssis latérale (5-1 ; 5-2) et un quatrième palier de pendule (2-4) entre l'actionneur (4-1 ; 4-2) mobile de façon linéaire dans la direction axiale et la pièce de châssis latérale (5-1 ; 5-2), moyennant quoi une suspension trapézoïdale montée de façon oscillante est réalisée pour un guidage parallèle au sol du dispositif (8).

2. Châssis (1) selon la revendication 1, **caractérisé en ce que** les paliers de pendule (2-1, 2-2, 2-3, 2-4, 2-5, 2-6, 2-7, 2-8) sont des liaisons qui sont mobiles en rotation dans l'ensemble des trois directions spatiales, dans lequel un palier de pendule (2-1 ; 2-2 ; 2-3 ; 2-4 ; 2-5 ; 2-6 ; 2-7 ; 2-8) est conçu en tant que roulement à rouleaux de pendule ou roulement à billes de pendule ou palier à articulation ou palier à tête d'articulation ou palier à articulation radial.

3. Châssis (1) selon l'une des revendications 1 et 2, **caractérisé en ce que** le châssis (1) présente huit paliers de pendule (2-1 ; 2-2 ; 2-3 ; 2-4 ; 2-5 ; 2-6 ; 2-7 ; 2-8) et les pièces de châssis latérales (5-1 ; 5-2) subissent un guidage à parallélogramme et peuvent simultanément être basculées à l'aide de l'actionneur (4-1 ; 4-2) mobile de façon linéaire dans la direction axiale autour de l'axe transversal avant, lequel mène à travers les paliers de pendule (2-3, 2-7) contre les extrémités avant des longerons (6-1 ; 6-2).

4. Châssis (1) selon la revendication 1 ou 3, **caractérisé en ce que** l'actionneur (4-1 ; 4-2) mobile de façon linéaire dans la direction axiale est un cylindre actionné hydrauliquement.

5. Châssis (1) selon la revendication 1 ou 3, **caractérisé en ce que** le dispositif (8) est un rouleau de transport (12) avec des poils en rotation dans le sens opposé à la direction de déplacement et est agencé contre les pièces de châssis latérales (5-1, 5-2) transversalement à la direction de déplacement.

6. Châssis (1) selon la revendication 5, **caractérisé en ce que** contre le rouleau de transport (12) est agencé à la suite un système de collecte (11), lequel reçoit les objets reçus et les maintient à gauche et à droite via des pièces latérales (15) (position de transport) ou les mène vers le côté gauche ou droit par l'ouverture de l'une des pièces latérales (15) (position hors-jeu).

7. Châssis (1) selon la revendication 5 ou 6, **caractérisé en ce que** le rouleau de transport (12) est actionné hydrauliquement, dans lequel le véhicule (13) fournit l'énergie hydraulique.

8. Châssis (1) selon la revendication 1, 3 ou 5, **caractérisé en ce que** les pièces de châssis latérales (5-1, 5-2) sont reliées à une traverse (14) ou à des éléments de fixation (16-1, 16-2).

9. Châssis (1) selon la revendication 1 ou 3, **caractérisé en ce qu'**au moins un stabilisateur (3-1 ; 3-2) relie ensemble le longeron (6-1 ; 6-2) et le cadre-échelle (7), via les points de rattachement (9-1 ; 9-2 ; 9-3) du stabilisateur contre ceux-ci, de sorte que se produise une stabilisation du châssis (1), et/ou le stabilisateur (3-1 ; 3-2) est une liaison pouvant être sollicitée par charge de traction ou être sollicitée par charge de traction et de pression.

10. Châssis (1) selon la revendication 9, **caractérisé en ce que** le au moins un stabilisateur (3-1 ; 3-2) est monté de façon à osciller librement dans ses points de rattachement (9-1 ; 9-2 ; 9-3), de sorte que se crée une suspension trapézoïdale parallèlement guidée, moyennant quoi se produit le guidage parallèle au sol du châssis (1).

11. Châssis (1) selon la revendication 9 à 10, **caractérisé en ce que** le stabilisateur (3-1 ; 3-2) est conçu en tant que câble ou chaîne dans le cas d'une liaison sollicitée par charge de traction, ou en tant que tige dans le cas d'une liaison sollicitée par charge de traction et de pression.

12. Châssis (1) selon la revendication 1, **caractérisé en ce que** la hauteur de travail entre le sol et le châssis (1) est définie par des patins (10-1, 10-2) et/ou des rouleaux montés par la suite, et/ou les patins (10-1, 10-2) et/ou les rouleaux montés par la suite peuvent être réglés en hauteur.

13. Châssis (1) selon la revendication 1, 3 ou 12, **caractérisé en ce que** les patins (10-1, 10-2) et/ou les rouleaux montés par la suite sont agencés contre la traverse (14) ou contre les éléments de fixation (16-1, 16-2) et/ou contre les longerons (6-1, 6-2).
